# EUROPÄISCHE PATENTSCHRIFT

(11) **EP 1 288 600 B1**
(45) Veröffentlichungstag und Bekanntmachung des Hinweises auf die Patenterteilung: **21.01.2009**
(21) Anmeldenummer: 02018853.8
(22) Anmeldetag: 23.08.2002
(51) Int. Cl.: F26B 17/14

(54) **Vorrichtung zur Trocknung eines rieselfähigen Stoffs im Gegenstrom mit einem gasförmigen Fluid**
Apparatus for drying bulk material in counter flow with a gaseous fluid
Dispositif de séchage d'un matériau en vrac en contre-courant avec un fluide gazeux

(30) Priorität: 24.08.2001 AT 13482001
(43) Veröffentlichungstag der Anmeldung: 05.03.2003
(73) Patentinhaber: Fasti Farrag & Stipsits GmbH, 6330 Kufstein (AT)
(72) Erfinder: Farrag, Rainer, Ing., US St. Charles, IL 60175 (US)
(74) Vertreter: Wunderlich, Rainer

(56) Entgegenhaltungen:
- CH-A- 354 026
- DE-C- 129 121
- GB-A- 894 695
- GB-A- 913 890
- US-A- 2 548 262
- US-A- 3 875 683
- US-A- 3 905 124

## Beschreibung

Die Erfindung betrifft eine Vorrichtung und ein Verfahren zur Trocknung eines rieselfähigen Stoffes im Gegenstrom gemäß den Oberbegriffen der Ansprüche 1 und 9.

Für die Trocknung von rieselfähigen Stoffen, wie z.B. Granulaten, Pulver, Fasern, Pellets und Körnern, im Gegenstromverfahren sind verschiedene Trockner, die aus einem trichterförmigen Behälter und einer Gaszufuhreinrichtung zur Zuführung des Trockenmediums bestehen, bekannt. Der zu trocknende Stoff wird dabei an einer Öffnung an der Oberseite des Trocknungsbehälters in den Trockner eingefüllt und im Bodenbereich des Trockners durch eine Gaszufuhreinrichtung ein Trockenluftstrom zugeleitet, der nachfolgend nach oben steigt und so den zu trocknenden Stoff entfeuchtet. Durch eine Auslaßöffnung an der Oberseite des Trockners entweicht schließlich das Trockenmedium aus dem Trockner und kann unter Umständen nach erneuter Trocknung wieder dem Prozeß zugeführt werden. Die Trocknung der Stoffe kann dabei kontinuierlich oder zumindest quasi kontinuierlich erfolgen, d.h., daß getrocknetes Material durch einen Auslauf am unteren Endbereich des Trocknungsbehälters dem Trockner entnommen werden kann, während am oberen Endbereich durch einen Einlaß weitere Mengen des Stoffes zugeführt werden können.

Derartige Trockner werden z.B. bevorzugt zur Trocknung hygroskopischer Kunststoffe beim Betrieb von Kunststoffextruderanlagen verwendet Dabei kann der Kunststoff in Form eines Granulats nach der Trocknung vom Auslauf des Trockners durch eine schlauchartige Leitung oder aber auch durch ein relativ aufwendiges Trockenluftfördersystem dem Extrudereinzug zugeführt werden. Bei besonders hygroskopischen Kunststoffen besteht das Problem, daß es auf dem Weg zwischen dem Auslauf des Trockners und dem Extrudereinzug zu einer Wiederbefeuchtung des getrockneten Granulats kommen kann. Um dies zu vermeiden, sind Trocknungsvorrichtungen entwickelt worden, die direkt am Extrudereinzug der Verarbeitungsmaschine montiert werden können. Dadurch wird erreicht, daß die Verbindung zwischen dem Auslauf des Trockners und dem Extrudereinzug auf ein Minimum beschränkt wird und demzufolge die Gefahr einer Wiederbefeuchtung vermindert wird. Durch die Befestigung der Trocknungsvorrichtung direkt am Extrudereinzug ist eine zusätzliche mechanische Belastung der entsprechenden Bauteile der Verarbeitungsmaschine gegeben, die nur durch entsprechend klein dimensionierte Trockenvorrichtungen bzw. Trocknungsbehälter in einem noch maximal tolerierbaren Maß gehalten werden kann.

In zahlreichen Anwendungsfällen der Herstellung von Kunststoffteilen sind außerdem die Zykluszeiten sehr stark gesunken. Kleine Zykluszeiten sind aber gleichbedeutend mit einem hohen Stoffdurchsatz, womit diese Forderung zur oben genannten Forderung, die Trockenvorrichtungen möglichst klein zu dimensionieren, diametral ist. Um beiden Bedingungen genügen zu können, sollte somit der Bereich innerhalb des Trocknerbehältervolumens, in dem das Kunststoffgranulat auf der erforderlichen Trocknungstemperatur gehalten wird, möglichst weit ausgedehnt werden, um das Kunststoffgranulat während seines Durchflusses durch den Trocknungsbehälter möglichst lange auf dieser Trocknungstemperatur halten zu können.

Aus der US 2,548,262 ist ein Trocknungsgerät bekannt, bei dem heiße Luft über ein in dem Trocknungsgerät angeordnetes zylindrisches Element und darin angeordnete Löcher in eine Trocknungskammer eingeleitet wird.

Die US 3,875,683 beschreibt ebenfalls eine Trocknungsvorrichtung, wobei hier zur gleichmäßigeren Verteilung der Luft innerhalb des Behältervolumens Diffusordüsen vorgesehen sind.

In der CH 354026 ist ein Verfahren zur Wärmebehandlung, insbesondere zur Trocknung von feinteiligem Feststoff mit Hilfe eines Gases in einem Rohr offenbart, bei dem das Gas in einer wendelförmigen Bahn kleiner Steigung durch das Rohr hinaufgeführt wird.

Die Aufgabe der Erfindung ist es daher, eine Vorrichtung bzw. ein Verfahren zur verbesserten Trocknung von rieselfähigen Stoffen zu schaffen. Es ist weiters eine Aufgabe der Erfindung eine Vorrichtung bzw. ein Verfahren zur Trocknung von rieselfähigen Stoffen zu schaffen, mit der bzw. dem ein hoher Stoffdurchsatz erreicht werden kann.

Die Aufgabe der Erfindung wird durch ein Verfahren gemäß den Merkmalen des Anspruchs 1 gelöst. Vorteilhaft ist dabei, daß durch die Ausbildung einer Gaszufuhreinrichtung mit einer Austrittsöffnung im unteren Endbereich und zumindest einer weiteren Austrittsöffnung im oberen Bereich des Behälters in dem Behälter eine gleichmäßigere Temperaturverteilung erreicht werden kann. Gegenüber Trocknungsvorrichtungen des Standes der Technik wird somit das Behältervolumen besser ausgenützt, wodurch die erfindungsgemäßen Vorrichtungen zur Trocknung bei gleicher Trockenleistung mit deutlich kleinerem Volumen ausgebildet werden können. Die Ausbildung einer einzigen Gaszufuhreinrichtung der beschriebenen Form bedeutet insbesondere die Möglichkeit einer konstruktiven Vereinfachung, wobei zum Aufbau der Trockenvorrichtung mit wenigen baulichen Komponenten das Auslangen gefunden werden kann. Bei der Herstellung solcher Trocknungsvorrichtungen kann somit ein deutlicher Kostenvorteil erzielt werden.

Eine Weiterbildung der Vorrichtung gemäß Anspruch 2 bietet den Vorteil, daß eine gleichmäßigere Verteilung des zugeführten Gases in dem sich im Behälter befindlichen Stoff erreicht wird. Durch die Anordnung der Gaszufuhreinrichtung im Inneren des Behälters wird weiters der Vorteil erzielt, daß Wärmeverluste der Gaszufuhreinrichtung sehr gering gehalten werden können.

Vorteilhaft ist auch eine Weiterbildung nach Anspruch 3, da dadurch ein möglicherweise den Stoffstrom störender Einfluß der Gaszufuhreinrichtung gering gehalten wird. Durch die Ge-staltung der-Gaszufuhreinrichtung aus rohrförmigen Leitungen wird außerdem der Vorteil erzielt, daß die Gaszufuhreinrichtung kostengünstig hergestellt werden kann.

Die erfindungsgemäße Vorrichtung, insbesondere in Verbindung mit der Ausbildung gemäß Anspruch 4, bietet den Vorteil, daß durch die Leitschurre eine stauende Wirkung auf das entgegen der Richtung des Stoffstroms strömende Gas erzielt wird. Dadurch wird eine noch bessere Verteilung des Gases im Bereich zwischen der Ausströmöffnung im unteren Endbereich des Behälters und der weiteren Ausströmöffnung im Oberteil des Behälters bzw. unterhalb der Leitschurre erreicht, woraus sich als Konsequenz eine gleichmäßigere Temperaturverteilung ergibt.

Vorteilhaft sind auch die Weiterbildungen der Vorrichtung nach den Ansprüchen 5 und 6 da durch die spitz zulaufend ausgebildete Leitschurre der Stoffstrom in dem Behälter nach außen abgelenkt wird und so die Verteilung der Strömungsgeschwindigkeit über den Querschnitt des Stoffstroms im Bereich unterhalb der Leitschurre gleichmäßiger wird. Dies hat den Vorteil, daß Stoffe aus unterschiedlichen Bereichen des Querschnitts des Stoffstroms sich annähernd gleich lange in jenem Volumenbereich des Behälters aufhalten, in dem die Trocknungstemperatur erreicht wird. Als Folge dessen wird eine gleichmäßigere Trocknung des Stoffes erreicht.

Durch die erfindungsgemäße Vorrichtung wird der Vorteil erzielt, daß an der Leitschurre eine zusätzliche Durchmischung des Stoffs, und somit eine Homogenisierung des Stoffstroms, erreicht wird.

Von Vorteil ist auch die Ausbildung der Vorrichtung nach Anspruch 7, da durch die Befestigung der Leitschurre an der Gaszufuhreinrichtung leicht auswechselbare, aus einer Gaszufuhreinrichtung und einer Leitschurre bestehende Baugruppen hergestellt werden können, die ein leichtes Umrüsten bzw. Reinigen der Vorrichtung für verschiedene Stoffe ermöglicht.

Die Ausbildung der Vorrichtung nach Anspruch 8 bietet den Vorteil, daß durch die zusätzliche Befestigung der Leitschurre am Behälter die Gaszufuhreinrichtung eine weitere Abstützung erfährt und sich somit eine stabilere Befestigung der Gaszufuhreinrichtung in dem Behälter ergibt.

Die Aufgabe der Erfindung wird eigenständig auch durch ein Verfahren zur Gegenstromtrocknung eines rieselförmigen Stoffes, gemäß den Merkmalen des Anspruches 9, gelöst.

Vorteilhaft ist dabei, daß durch die Zuführung des zur Trocknung verwendeten Gases an zumindest zwei voneinander distanzierten Stellen die Verweildauer des Stoffes in jenen Bereich des Stoffstroms in dem die Trockentemperatur vorherrschend ist, verlängert wird. Dies hat den Vorteil, daß somit die Geschwindigkeit des Stoffstroms entsprechend erhöht werden kann.

Vorteilhaft ist weiters auch die Ausbildung des Verfahrens gemäß Anspruch 10, da durch die Zuführung des Gases im Inneren des Stoffstroms die Verteilung des Gases im Stoffstrom besser erfolgen kann.

Das erfindungsgemäße Verfahren bietet den Vorteil, daß neben der zusätzlichen Durchmischung des Stoffes in dem Stoffstrom durch die von der Leitschurre ausgehende stauende Wirkung auf das zur Trocknung verwendete Gas der Wärmeaustausch, mit dem Stoff effizienter erfolgen kann.

Die Weiterbildung des Verfahrens nach Anspruch 11 bietet den Vorteil, daß damit eine gute Trockenwirkung erzielt werden kann, wobei gleichzeitig vermieden wird, daß durch Temperaturspitzen an den Oberflächen der Stoffteilchen diese an der Oberfläche anschmelzen und es so zu einer Verklumpung des Stoffes kommen kann.

Die Weiterbildung des Verfahrens gemäß Anspruch 12 bietet den Vorteil, daß unter Verwendung von Luft als gasförmigen Fluid zur Trocknung die Ausführung des Verfahrens sehr kostengünstig erfolgen kann, da die Herstellung von Druckluft und deren Trocknung technisch mit relativ geringem Aufwand möglich ist.

Zum besseren Verständnis der Erfindung wird diese anhand der nachfolgenden Figuren näher erläutert.

Es zeigen in vereinfachter Darstellung:
- Fig. 1: eine Prinzipdarstellung einer Vorrichtung, wobei der Behälter geschnitten dargestellt ist;
- Fig. 2: ein Ausführungsbeispiel einer Vorrichtung mit einem rotationssymmetrischen Behälter;
- Fig. 3: ein Detail der Gaszufuhreinrichtung mit einer Leitschurre in perspektivischer Darstellung;
- Fig. 4: eine Vorrichtung mit einer außen am Behälter angeordneten Gaszufuhreinrichtung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

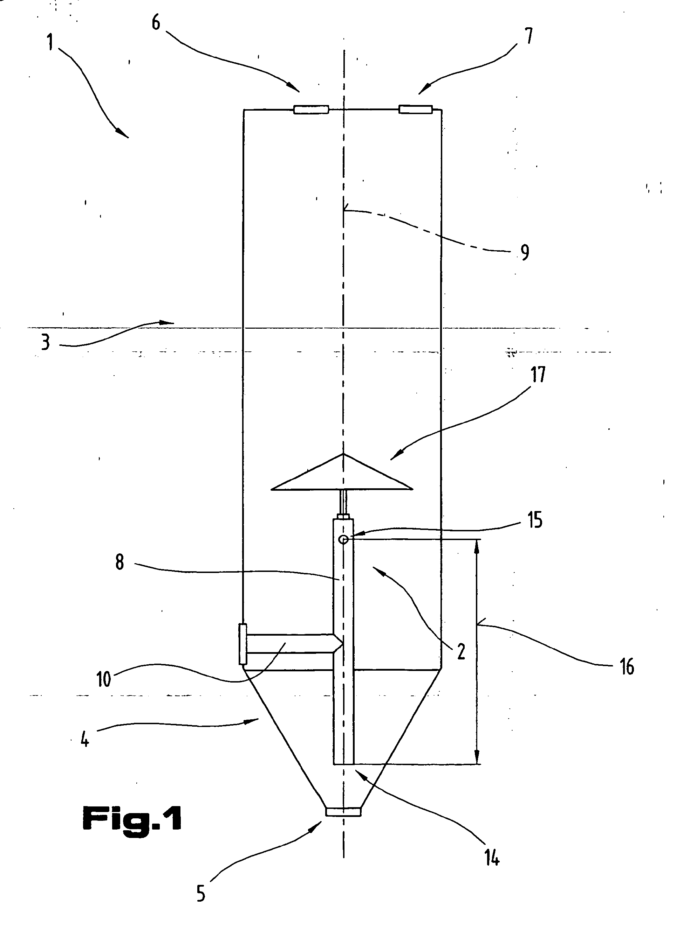

Die Fig. 1 zeigt eine Prinzipdarstellung einer Vorrichtung bestehend aus einem Behälter 1 und einer Gaszufuhreinrichtung 2. Der Behälter 1 ist dabei geschnitten dargestellt, so daß das Innere der Vorrichtung sichtbar ist.

Der Behälter 1 besteht aus einem Oberteil 3 mit quadratischem Querschnitt und einem Unterteil 4 der als pyramidenförmiger Trichter ausgebildet ist. An seinem unteren Endbereich verfügt der trichterförmige Unterteil 4 über einen Auslauf 5 der für die Entnahme des getrockneten Stoffes vorgesehen ist. Am oberen Endbereich des Behälters 1 bzw. am oberen Endbereich des Oberteils 3 befindet sich ein Einlaß 6, durch den der Behälter 1 mit dem zur Trocknung vorgesehenen rieselförmigen Stoff befüllt werden kann und eine Austrittsöffnung 7 für das zur Trocknung verwendete Gas.

Der Behälter 1 hat ein Volumen von 35 Liter und ist solcherart für die direkte Befestigung an einem Extrudereinzug einer konventionellen Kunststoffverarbeitungsmaschine geeignet. Das Volumen des Behälters 1 kann in einem Bereich von 8 bis 150 Liter liegen. Die aus dem entsprechenden Eigengewicht der auf dem Extrudereinzug montierten Vorrichtung resultierende mechanische Belastung liegt für übliche Kunststoffverarbeitungsmaschinen in einem noch tolerierbaren Bereich.

Die Gaszufuhreinrichtung 2 besteht aus einer rohrförmig ausgebildeten Leitung 8, die sich in Richtung einer Längsmittelachse 9 des Behälters 1 erstreckt. Mit einer Leitung 10 der Gaszufuhreinrichtung 2 ist diese am Behälter 1 befestigt. Durch die Leitung 10 und die Leitung 8 gelangt das zur Trocknung vorgesehene gasförmige Fluid zu einer ersten Austrittsöffnung 14 der Gaszufuhreinrichtung 2, durch die es in den unteren Endbereich des Unterteils 4 ausströmen kann. Die Gaszufuhreinrichtung 2 ist dabei im Behälter 1 so angeordnet, daß sich die Austrittsöffnung 14 in einem unteren Endbereich des Behälters 1 befindet. Die Gaszufuhreinrichtung 2 verfügt über eine weitere Austrittsöffnung 15, die so angeordnet ist, daß sie zwischen der ersten Austrittsöffnung 14 und einem oberen Endbereich des Behälters 1 bzw. dem oberen Endbereich des Oberteils 3 liegt.

Zur Trocknung eines im Behälter 1 befindlichen Granulats eines Stoffes wird durch die Austrittsöffnung 14 getrocknete und erwärmte Luft zugeführt. Diese Luft verteilt sich zunächst im Unterteil 4 und strömt durch das Granulat in Richtung auf den Oberteil 3, wobei das Granulat auf Trockentemperatur erwärmt und dabei dessen Feuchtigkeit von der Luft entzogen wird. Von der vorbeiströmenden Luft wird die Feuchtigkeit abtransportiert. Die mit der Feuchtigkeit des Granulats beladene Luft verläßt schließlich durch die Austrittsöffnung 7 den Behälter 1. Indem die Luft von der Austrittsöffnung 14 immer weiter nach oben strömt gibt sie Wärme an das Granulat ab und verringert daher seine Temperatur kontinuierlich. Die optimale Trocknungstemperatur des Granulats wird somit auf einen Bereich in der Umgebung der Austrittsöffnung 14 im Unterteil 4 beschränkt sein. Die Temperatur des Granulats fällt in Richtung auf den oberen Endbereich des Behälters 1 hin allmählich immer weiter ab.

Durch eine an der Gaszufuhreinrichtung 2 zusätzlich vorhandene Austrittsöffnung 15 wird erreicht, daß das nach unten strömende Granulat im Behälter 1 bereits in einem weiter oben liegenden Bereich auf die erforderliche Trockentemperatur erwärmt wird. Durch die Zuführung der Luft, durch die um eine Wegstrecke 16 voneinander distanzierten Austrittsöffnungen 14 und 15 im Inneren des Stoffstroms wird somit der Stoff über diese Wegstrecke 16 zumindest annähernd auf der Trockentemperatur gehalten.

Die Austrittsöffnungen 14 und 15 in der Leitung 8 können selbstverständlich jeweils auch durch mehrere, insbesondere kleine, Austrittsöffnungen ausgebildet sein. Vorteilhafterweise werden die Austrittsöffnungen 14 und 15 mit einem Querschnitt ausgebildet, der kleiner ist als die Korngröße des zu trocknenden Stoffs, um ein Eindringen von Stoffteilchen in die Gaszufuhreinrichtung 2 zu verhindern. Durch Ausbildung unterschiedlich großer Gesamtquerschnitte oder eine verschiedene Anzahl der Austrittsöffnungen 14 bzw. 15 kann außerdem das Verhältnis der an den Austrittsöffnungen 14 und 15 ausströmenden Luftmengen beeinflußt werden. Es ist selbstverständlich auch möglich, die an den Austrittsöffnungen 14 und 15 in das Granulat ausströmenden Luftmengen durch an diesen Austrittsöffnungen 14 und 15 angebrachten und von außen steuerbaren Ventilen zu regulieren.

In einer alternativen Ausführungsform einer Vorrichtung können an der Leitung 8 selbstverständlich auch weitere Austrittsöffnungen zwischen der Austrittsöffnung 14 und der Austrittsöffnung 15 angeordnet werden. Dadurch kann eine noch bessere Verteilung des zur Trocknung vorgesehenen und in den Behälter 1 einströmenden Gases erreicht werden.

Oberhalb der Austrittsöffnung 15 ist an der Gaszufuhreinrichtung 2 eine Leitschurre 17 angeordnet. Die Leitschurre 17 ist pyramidenförmig ausgebildet und bewirkt, daß das nach unten strömende Granulat des zu trocknenden Stoffs aus dem Mittelbereich, d.h. aus dem die Längsmittelachse 9 unmittelbar umgebenden Bereich, nach Außen hin verdrängt wird. Dadurch wird erreicht, daß die Verteilung der Strömungsgeschwindigkeit des Granulats über den Querschnitt des Behälters 1 gleichmäßiger wird. Ein weiterer Vorteil der Leitschurre 17 ist, daß dadurch eine rückstauende Wirkung auf die nach oben strömende Luft erzeugt wird. Damit wird das Aufrechterhalten der Trocknungstemperatur zumindest über den Bereich der Wegstrecke 16 weiter unterstützt. Die Leitschurre 17, die im Stoffstrom des Granulats ein Hindernis darstellt, bewirkt außerdem eine zusätzliche Durchmischung des Granulats.

Selbstverständlich kann die Leitschurre 17 auch mit einer anderen Form ausgebildet sein. Beispielsweise ist es auch möglich, die Leitschurre 17 kegelförmig zu gestalten. In vorteilhafter Weise ist die Leitschurre 17 spitz zulaufend ausgebildet, wobei die Spitze in Richtung auf den oberen Endbereich des Behälters 1 weist.

Durch die Anordnung der Leitschurre 17 wird eine Querschnittsfläche des Behälters 1 senkrecht zu seiner Längsmittelachse 9 auf eine verbleibende Durchströmöffnung verringert. Die verbleibende Durchströmöffnung entspricht der Projektion bei Draufsicht in Richtung der Längsmittelachse 9 des Behälters 1. Diese verbleibende Durchströmöffnung ist gegenüber der Querschnittsfläche des Behälters 1 um einen Anteil von ca. 50 %, verringert. Abhängig von der Art des Granulats ist diese Verringerung in einem Bereich von 20 bis 70 %.

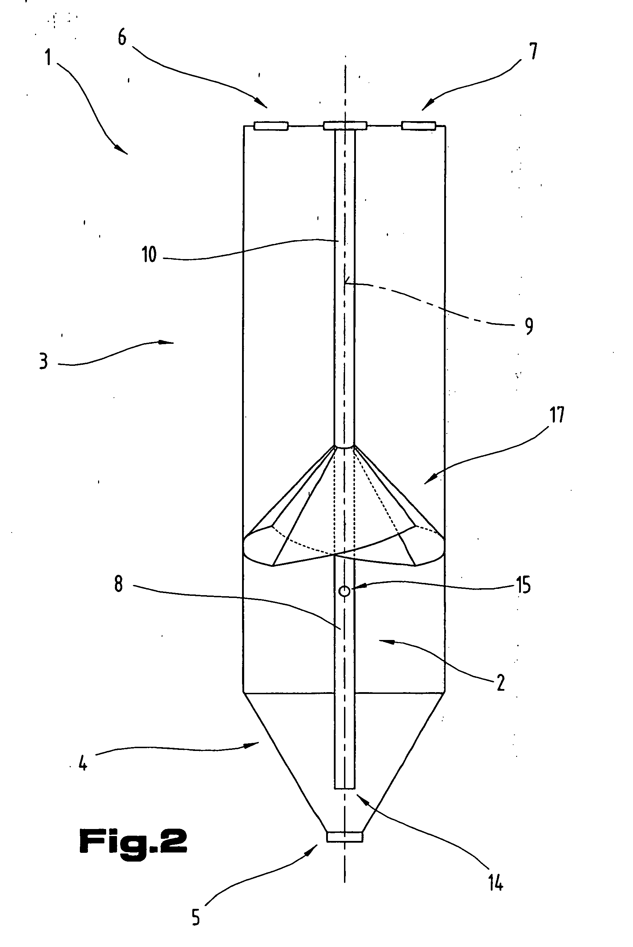

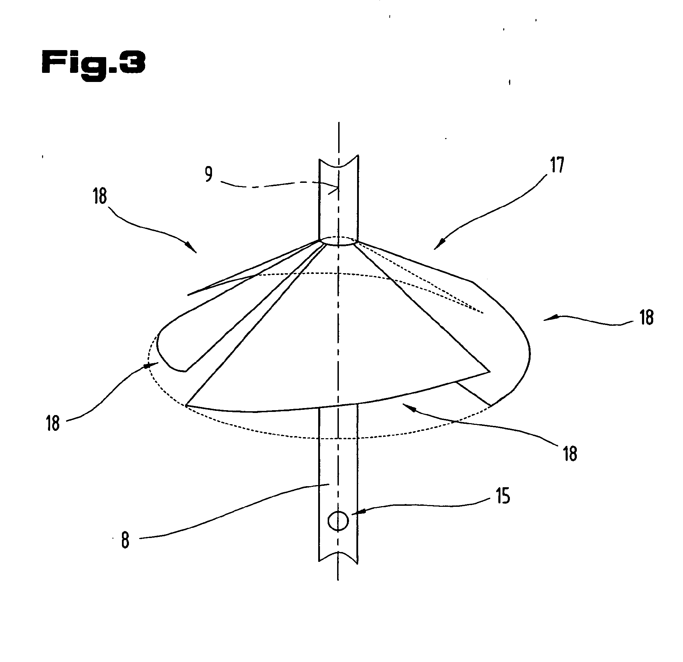

Die Fig. 2 und 3 zeigen ein Ausführungsbeispiel einer Vorrichtung mit einem rotationssymmetrisch ausgebildeten Behälter 1. Der Oberteil 3 des Behälters ist dabei zylinderförmig und der Unterteil 4 kegelförmig, d.h. als kegelförmiger Trichter, ausgebildet.

Die Gaszufuhreinrichtung 2 wird dabei durch die rohrförmig ausgebildete Leitung 8, die sich in Richtung der Längsmittelachse 9 ausdehnt, gebildet. Die Leitung reicht dabei vom oberen Endbereich des Behälters 1 bis in den unteren Endbereich des Unterteiles 4, wo die Gaszufuhreinrichtung 2 über die Austrittsöffnung 14 verfügt.

Zwischen dem Übergangsbereich des Oberteils 3 und des Unterteils 4 und dem oberen Endbereich des Behälters 1 verfügt die Gaszufuhreinrichtung 2 über eine weitere Austrittsöffnung 15. Über dieser Austrittsöffnung 15, d.h. zwischen der Austrittsöffnung 15 und dem oberen Endbereich des Behälter 1, ist an der Gaszufuhreinrichtung 2 die Leitschurre 17 angeordnet. Diese Leitschurre 17 ist aus vier Einzelsegmenten 18 gebildet, wobei diese Einzelsegmente 18, und somit die Leitschurre 17, auf die Längsmittelachse 9 hin spitz zulaufend ausgebildet sind. Die Spitze der Leitschurre 17 wiederum weist in Richtung auf den oberen Endbereich des Behälters 1. Die Einzelsegmente 18 der Leitschurre 17 sind, gegenüber einer zur Längsmittelachse 9 senkrechten Ebene, schräg angeordnet, so daß im Bereich der Leitschurre 17 das nach unten strömende Granulat des Stoffes so abgelenkt wird, daß ein zumindest annähernd spiralförmiger Stoffstrom entsteht. Dadurch wird außerdem eine zusätzliche Durchmischung des Granulats bewirkt.

Die Einzelsegmente 18 der Leitschurre 17 sind an ihrem der Längsmittelachse 9 abgewandten Endbereichen am Oberteil 3, und somit also am Behälter 1, befestigt. Die Einzelsegmente 18 sind so ausgebildet, daß sie bei Draufsicht in Richtung der Längsmittelachse 9 die gesamte Querschnittsfläche des Behälters 1 überdecken.

Eine Leitschurre 17 wird bevorzugt so ausgebildet, daß die verbleibende Durchströmöffnung in Richtung der Längsmittelachse 9 des Behälters 1 gegenüber der Querschnittsfläche des Behälters 1 senkrecht zu seiner Längsmittelachse 9 um einen Anteil in einem Bereich von 20 bis 100 %, bevorzugt 20 bis 70 %, verringert ist.

Die Fig. 3 zeigt ein Detail der Gaszufuhreinrichtung 2 mit der Leitschurre 17 in perspektivischer Darstellung. Die Einzelsegmente 18 der Leitschurre 17 sind dabei gegenüber einer zur Längsmittelachse 9 senkrechten Ebene schräg angeordnet. Die Spitze der Leitschurre 17 weist dabei in Richtung auf den oberen Endbereich des Behälters 1 (Fig. 2).

Eine Vorrichtung, wie sie in den Fig. 1 bis 3 beschrieben ist, ist zur Durchführung eines Verfahrens zur Gegenstromtrocknung eines rieselfähigen Stoffs mit einem gasförmigen Fluid geeignet. Bei einem derartigen Verfahren wird der Stoff in einem Behälter zumindest teilweise kontinuierlich in einem Stoffstrom gefördert und durch Zuführung eines erhitzten und getrockneten Gases auf eine Trockentemperatur erwärmt. An zumindest zwei voneinander um eine Wegstrecke distanzierten Stellen des Stoffstroms, bevorzugt im Inneren des Stoffstroms, wird Gas zugeführt und solcher Art im Bereich über diese Wegstrecke 16 der Stoff zumindest annähernd auf der Trockentemperatur gehalten. In einer bevorzugten Ausführungsform wird der Stoff außerdem an einer feststehenden Leitschurre 17 an einem ersten Endbereich der Wegstrecke 16 einer Durchmischung unterworfen.

Die Trockentemperatur für die zu trocknenden Stoffe ist vorteilhafterweise um einen Betrag in einem Bereich von 50 °C bis 130 °C, bevorzugt von 70 °C bis 110 °C, gegenüber dem Schmelzpunkt des betreffenden Stoffs, erniedrigt. In vorteilhafter Weise ist die Trockentemperatur für den zu trocknenden Stoff um ca. 90 °C kleiner als der Schmelzpunkt des betreffenden Stoffs.

Als Gas bzw. gasförmiges Fluid wird beim erfindungsgemäßen Verfahren bevorzugt Luft, insbesondere getrocknete Druckluft, eingesetzt. Selbstverständlich ist es aber auch möglich, andere Gase zu verwenden.

Mit dem erfindungsgemäßen Verfahren ist es möglich, rieselfähige Stoffe, wie z.B. Granulate, Pulver, Fasern, Pellets oder Körner, von z.B. Kunststoffen wie Polycarbonat, Polyamide, Polyimide, Polyethylenterephthalat, Styrole usw. zu trocknen.

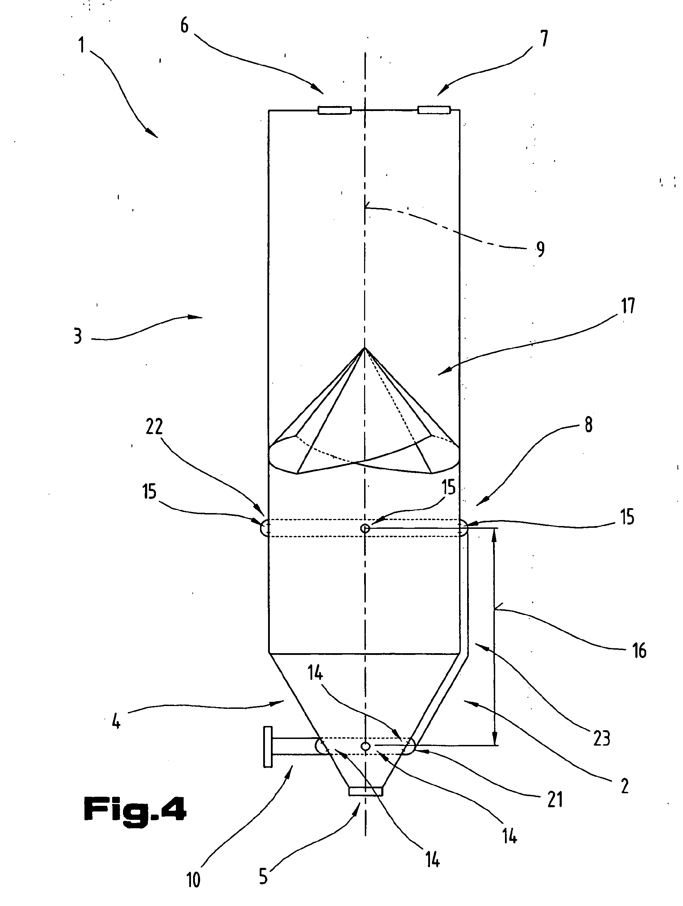

Fig. 4 zeigt eine Vorrichtung mit einer außen am Behälter 1 angeordneten Gaszufuhreinrichtung 2. Die Leitung 8 der Gaszufuhreinrichtung 2 besteht dabei aus einem Leitungssystem mit einer den unteren Endbereich des Unterteils 4 an einem Umfang umschließenden Leitung 21 und einer davon um die Wegstrecke 16 distanzierten und den Oberteil 3 an einen Umfang umschließenden Leitung 22 und einer diese beiden Leitungen verbindenden Leitung 23. Die Versorgung der Leitung 8 mit dem zur Trocknung erforderlichen Gas erfolgt durch die Leitung 10.

Zur Zuführung des Gases in den Behälter 1 verfügt die Leitung 21 und der Unterteil 4 über mehrere gemeinsame Austrittsöffnungen 14 und die Leitung 22 und der Oberteil 3 über mehrere gemeinsame Austrittsöffnungen 15. Zwischen den Austrittsöffnungen 15 und dem oberen Endbereich des Behälters 1 bzw. dem oberen Endbereich des Oberteils 3 ist eine Leitschurre 17, wie bereits in den Fig. 2 und 3 beschrieben, angeordnet.

Der Ordnung halber sei abschließend darauf hingewiesen, daß zum besseren Verständnis des Aufbaus der Vorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Behälter
- 2: Gaszufuhreinrichtung
- 3: Oberteil
- 4: Unterteil
- 5: Auslauf

- 6: Einlaß
- 7: Austrittsöffnung
- 8: Leitung
- 9: Längsmittelachse
- 10: Leitung

- 11 12 13 14: Austrittsöffnung
- 15: Austrittsöffnung

- 16: Wegstrecke
- 17: Leitschurre
- 18: Einzelsegment
19 20
- 21: Leitung
- 22: Leitung
- 23: Leitung

## Patentansprüche

1. Vorrichtung zur Trocknung eines rieselfähigen Stoffs im Gegenstrom mit einem gasförmigen Fluid bestehend aus einem Behälter und einer Gaszufuhreinrichtung mit einer ersten Austrittsöffnung in einem unteren Endbereich des Behälters und einer weiteren Austrittsöffnung (15) zwischen der ersten Austrittsöffnung (14) und einem oberen Endbereich des Behälters (1), wobei oberhalb der weiteren Austrittsöffnung (15) bzw. Austrittsöffnungen (14, 15) eine Leitschurre (17) angeordnet ist,
**dadurch gekennzeichnet,**
**dass** die Leitschurre (17) aus mehreren Einzelsegmenten (18) aufgebaut ist und die Einzelsegmente (18) zur Erzeugung eines zumindest annähernd spiralförmigen Stoffstroms gegenüber einer zu einer Längsmittelachse (9) des Behälters (1) senkrechten Ebene schräg angeordnet sind.

2. Vorrichtung nach Anspruch 1,
**dadurch gekennzeichnet,**
**daß** die Gaszufuhreinrichtung (2) in diesem Behälter (1) angeordnet ist.

3. Vorrichtung nach Anspruch 1 oder 2,
**dadurch gekennzeichnet,**
**daß** die Austrittsöffnungen (14, 15) der Gaszufuhreinrichtung (2) an zumindest einer rohrförmig ausgebildeten Leitung (8), die sich in Richtung der Längsmittelachse (9) des Behälters (1) ausdehnt, angeordnet ist.

4. Vorrichtung nach einem oder mehreren der vorhergehenden Ansprüche,
**dadurch gekennzeichnet,**
**daß** durch die Anordnung der Leitschurre (17) eine verbleibende Durchströmöffnung in Richtung der Längsmittelachse (9) des Behälters (1) gegenüber einer Querschnittsfläche des Behälters (1) senkrecht zu seiner Längsmittelachse (9) um einen Anteil in einem Bereich von 20% bis 100%, bevorzugt 20% bis 70%, verringert ist.

5. Vorrichtung nach einem oder mehreren der vorhergehenden Ansprüche,
**dadurch gekennzeichnet,**
**daß** die Leitschurre (17) spitz zulaufend ausgebildet ist und die Spitze in Richtung auf den oberen Endbereich des Behälters (1) weist.

6. Vorrichtung nach einem oder mehreren der vorhergehenden Ansprüche,
**dadurch gekennzeichnet,**
**daß** die Leitschurre (17) pyramiden- oder kegelförmig ausgebildet ist.

7. Vorrichtung nach einem oder mehreren der vorhergehenden Ansprüche,
**dadurch gekennzeichnet,**
**daß** die Leitschurre (17) bzw. die Leitschurren (17) an der Gaszufuhreinrichtung (2) befestigt ist bzw. sind.

8. Vorrichtung nach einem oder mehreren der vorhergehenden Ansprüche,
**dadurch gekennzeichnet,**
**daß** die Leitschurre (17) bzw. die Leitschurren (17) am Behälter (1) befestigt ist bzw. sind.

9. Verfahren zur Gegenstromtrocknung eines rieselfähigen Stoffs mit einem gasförmigen Fluid in einem Behälter (1), wobei der Stoff in dem Behälter zumindest teilweise kontinuierlich in einem Stoffstrom gefördert wird und durch Zuführung eines erhitzten und getrockneten Gases auf eine Trockentemperatur erwärmt wird und wobei an zumindest zwei voneinander um eine Wegstrecke (16) distanzierten Stellen des Stoffstroms das Gas zugeführt wird und über diese Wegstrecke (16) zumindest annähernd auf der Trockentemperatur gehalten wird,
**dadurch gekennzeichnet,**
**daß** der Stoff an einer feststehenden Leitschurre (17) an einem ersten Endbereich der Wegstrecke einer Durchmischung unterworfen wird, wobei die Leitschurre (17) zur Erzeugung eines zumindest annähernd spiralförmigen Stoffstroms aus Einzelsegmenten (18) aufgebaut ist, welche gegenüber einer zu einer Längsmittelachse (9) des Behälters (1) senkrechten Ebene schräg angeordnet sind.

10. Verfahren nach Anspruch 9,
**dadurch gekennzeichnet,**
**daß** zumindest eine der voneinander distanzierten Stellen, an denen das Gas zugeführt wird, im Inneren des Stoffstroms angeordnet ist.

11. Verfahren nach einem oder mehreren der Ansprüche 9 oder 10,
**dadurch gekennzeichnet,**
**daß** die Trockentemperatur einen Wert hat, der um einen Betrag in einem Bereich von 50 °C bis 130 °C, bevorzugt von 70 °C bis 110 °C, z.B. 90 °C, kleiner ist als der Schmelzpunkt des Stoffs.

12. Verfahren nach einem oder mehreren der Ansprüche 9 bis 11,
**dadurch gekennzeichnet,**
**daß** als Gas Luft, insbesondere Druckluft, verwendet wird.

## Claims

1. Device for drying a pourable material in counter-flow with a gaseous fluid consisting of a container and a gas feeding device having a first outlet aperture located in a lower end portion of the container and a further outlet aperture (15) located between the first outlet aperture (14) and an upper end portion of the container (1), wherein a guide chute (17) is arranged above the further outlet aperture (15) or outlet apertures (14, 15),
**characterized in that**
the guide chute (17) is composed of several individual segments (18) and, for the purpose of generating an at least approximately spiral-shaped flow of material, the individual segments (18) are arranged in an inclined manner with respect to a plane extending perpendicularly to a longitudinal centre axis (9) of the container (1).

2. Device according to claim 1,
**characterized in that**
the gas feeding device (2) is arranged in this container (1).

3. Device according to claim 1 or 2,
**characterized in that**
the outlet apertures (14, 15) of the gas feeding device (2) are arranged on at least one tubular designed conduit (8) that extends in the direction of the longitudinal centre axis (9) of the container (1).

4. Device according to any one or several of the preceding claims,
**characterized in that**
as a result of the arrangement of the guide chute (17), a through-flow aperture remaining in the direction of the longitudinal centre axis (9) of the container (1) with respect to a cross-sectional surface of the container (1) lying perpendicularly to its longitudinal centre axis (9) is reduced by a proportion ranging from 20% up to 100%, preferably ranging from 20% up to 70%.

5. Device according to any one or several of the preceding claims,
**characterized in that**
the guide chute (17) is designed in a manner tapering to a point and the point faces in the direction of the upper end portion of the container (1).

6. Device according to any one or several of the preceding claims,
**characterized in that**
the guide chute (17) has a pyramidal or conical design.

7. Device according to any one or several of the preceding claims,
**characterized in that**
the guide chute (17) or the guide chutes (17) is or are mounted on the gas feeding device (2).

8. Device according to any one or several of the preceding claims,
**characterized in that**
the guide chute (17) or the guide chutes (17) is or are mounted on the container (1).

9. Method for the counter-flow drying of a pourable material with a gaseous fluid in a container (1), wherein the material is conveyed in the container in an at least partially continuous manner in a material flow and, by feeding-in a heated and dried gas, is heated to a drying temperature and wherein the gas is fed-in in at least two places of the material flow, which are spaced from each other by a distance (16), and is kept across this distance (16) at least approximately at the drying temperature,
**characterized in that**
the material is subjected to intermixing on a stationary guide chute (17) on a first end portion of the distance, wherein, for the purpose of generating an at least approximately spiral-shaped flow of material, the guide chute (17) is composed of individual segments (18) that are arranged in an inclined manner with respect to a plane extending perpendicularly to a longitudinal centre axis (9) of the container (1).

10. Method according to claim 9,
**characterized in that**
at least one of the mutually spaced places, at which the gas is fed-in, is arranged in the inside of the material flow.

11. Method according to any one or several of claims 9 or 10,
**characterized in that**
the drying temperature has a value that is lower than the melting point of the material by an amount lying in the range from 50°C up to 130°C, preferably lying from 70°C up to 110°C, e.g. 90°C.

12. Method according to any one or several of claims 9 to 11,
**characterized in that**
air, in particular compressed air, is used as gas.

## Revendications

1. Dispositif de séchage d'un matériau fluide en contre-courant avec un fluide gazeux, composé d'un réservoir et d'un dispositif d'introduction de gaz avec une première ouverture de sortie dans une zone d'extrémité inférieure du réservoir et une autre ouverture de sortie (15) entre la première ouverture de sortie (14) et une zone d'extrémité supérieure du réservoir (1), une goulotte directrice (17) étant placée au-dessus de l'autre ouverture de sortie (15) ou bien des ouvertures de sortie (14, 15), ***caractérisé en ce que*** la goulotte directrice (17) est constituée de plusieurs segments individuels (18) et, pour produire un écoulement de matériau au moins approximativement en spirale, les segments individuels (18) sont disposés inclinés par rapport à un plan perpendiculaire à un axe longitudinal médian (9) du réservoir (1).

2. Dispositif selon la revendication 1, ***caractérisé en ce que*** le dispositif (2) d'introduction du gaz est placé dans ce réservoir (1).

3. Dispositif selon la revendication 1 ou 2, ***caractérisé en ce que*** les ouvertures de sortie (14, 15) du dispositif (2) d'introduction du gaz sont placées sur au moins une conduite (8) réalisée tubulaire, qui s'étend dans la direction de l'axe longitudinal médian (9) du réservoir (1).

4. Dispositif selon l'une quelconque ou plusieurs des revendications précédentes, ***caractérisé en ce que**,* du fait de l'agencement de la goulotte directrice (17), une ouverture d'écoulement restante dans la direction de l'axe longitudinal médian (9) du réservoir (1) est réduite par rapport à une surface de section transversale du réservoir (1) perpendiculairement à son axe longitudinal médian (9), d'une proportion comprise entre 20 % et 100 %, de préférence entre 20 % et 70 %.

5. Dispositif selon l'une quelconque ou plusieurs des revendications précédentes, ***caractérisé en ce que*** la goulotte directrice (17) est réalisée pointue et la pointe est dirigée en direction de la zone d'extrémité supérieure du réservoir (1).

6. Dispositif selon l'une quelconque ou plusieurs des revendications précédentes, ***caractérisé en ce que*** la goulotte directrice (17) est réalisée en forme de pyramide ou de cône.

7. Dispositif selon l'une quelconque ou plusieurs des revendications précédentes, ***caractérisé en ce que*** la goulotte directrice (17) ou les goulottes directrices (17) est ou sont fixée(s) au dispositif (2) d'introduction du gaz.

8. Dispositif selon l'une quelconque ou plusieurs des revendications précédentes, ***caractérisé en ce que*** la goulotte directrice (17) ou les goulottes directrices (17) est ou sont fixée(s) au réservoir (1).

9. Procédé de séchage en contre-courant d'un matériau fluide avec un fluide gazeux dans un réservoir (1), le matériau étant transporté dans le réservoir d'une manière au moins partiellement continue dans un écoulement de matériau et étant chauffé à une température de séchage par introduction d'un gaz chauffé et séché, et le gaz étant introduit en au moins deux emplacements de l'écoulement de matériau distants l'un de l'autre d'une distance précise (16) et étant maintenu au moins approximativement à la température de séchage sur cette distance (16), ***caractérisé en ce que*** le matériau est soumis à un mélange sur une goulotte directrice fixe (17) dans une première zone d'extrémité de la distance, la goulotte directrice (17) étant composée, pour produire un écoulement de matériau au moins approximativement en spirale, de segments individuels (18) qui sont disposés inclinés par rapport à un plan perpendiculaire à un axe longitudinal médian (9) du réservoir (1).

10. Procédé selon la revendication 9, ***caractérisé en ce que*** l'un au moins des emplacements distants l'un de l'autre auxquels le gaz est introduit est placé à l'intérieur de l'écoulement de matériau.

11. Procédé selon l'une quelconque ou plusieurs des revendications 9 ou 10, ***caractérisé en ce que*** la température de séchage possède une valeur qui est inférieure au point de fusion du matériau d'une quantité comprise entre 50°C et 130°C, de préférence entre 70°C et 110°C, par exemple 90°C.

12. Procédé selon l'une quelconque ou plusieurs des revendications 9 à 11, ***caractérisé en ce que**,* comme gaz, on utilise de l'air, en particulier de l'air comprimé.
